# EUROPÄISCHE PATENTSCHRIFT

(11) **EP 1 905 620 B1**
(45) Veröffentlichungstag und Bekanntmachung des Hinweises auf die Patenterteilung: **06.05.2009**
(21) Anmeldenummer: 07024742.4
(22) Anmeldetag: 12.09.2006
(51) Int. Cl.: B60G 25/00, B62D 33/06

(54) **Aufhängungseinrichtung mit Wattgestänge**
Suspension device with Watt-linkage
Dispositif de suspension avec un parallélogramme de Watt

(30) Priorität: 14.09.2005 DE 102005043998
(43) Veröffentlichungstag der Anmeldung: 02.04.2008
(62) Teilanmeldung aus: 06019024.6
(73) Patentinhaber: ZF Friedrichshafen AG, 88038 Friedrichshafen (DE)
(72) Erfinder: Haeusler, Felix, 49074 Osnabrück (DE); Eismann, Jens, 49326 Melle (DE); Küpker, Timo, 27239 Twistringen (DE); Lohmüller, Holger, 49191 Vehrte (DE); von Lienen, Marc, 49356 Diepholz (DE)

(56) Entgegenhaltungen:
- EP-A1- 0 585 774
- EP-A2- 0 882 641
- DE-A1- 1 455 592
- DE-B- 1 107 526
- US-A- 3 774 711
- US-A- 4 014 533
- US-A- 4 149 608

## Beschreibung

Die Erfindung betrifft eine Aufhängungseinrichtung zur federnden bzw. stoßdämpfenden Aufhängung eines Massekörpers gemäß dem Oberbegriff des Patentanspruchs 1.

Aufhängungseinrichtungen der eingangs genannten Art kommen beispielsweise, jedoch keineswegs ausschließlich, bei Lastkraftwagen und ähnlichen Schwerlastfahrzeugen zum Einsatz, um die Fahrerkabine bezüglich Schwingungen und Bewegungen vom Fahrzeugchassis zu entkoppeln. Da bei Schwerlastfahrzeugen die Federraten der Fahrwerksfedern aufgrund der hohen Fahrzeuglasten unvermeidlich hoch ausfallen, werden Fahrbahnunebenheiten oder auch Schwingungen aus Achsen und Antriebsstrang zu einem erheblichen Teil noch über die Achsfederung auf das Chassis übertragen.

Um im Sinne der Ergonomie und des Arbeitsschutzes für den Fahrer die Übertragung derartiger andauernder Stöße und Vibrationen auf das Fahrerhaus und somit auf den Arbeitsplatz des Fahrers zu minimieren, sind Fahrerhausaufhängungen entwickelt worden, bei denen das Fahrerhaus bzw. die Fahrerkabine unter Verwendung eines eigenen Aufhängungssystems am Fahrzeugchassis abgestützt sind. Solche Aufhängungssysteme für die Fahrerkabine können dank der im Vergleich zur Fahrzeugmasse viel geringeren Masse der Fahrerkabine mit erheblich niedrigeren Federraten und weicheren Stoßdämpfern als die Achsaufhängung ausgelegt werden, weshalb Fahrbahnunebenheiten bzw. aus Antriebsstrang oder Achsen des Fahrzeugs stammende Schwingungen dank solcher Kabinen-Aufhängungssysteme deutlich besser vom Arbeitsplatz des Fahrers isoliert bzw. ferngehalten werden können.

Derartige Aufhängungseinrichtungen für Fahrerkabinen sind jedoch, insbesondere bei erhöhten Anforderungen an Querkraftabstützung bzw. Kinematik - wie beispielsweise Nick- oder Wankunterdrückung - konstruktiv verhältnismäßig aufwändig. So müssen gegebenenfalls neben den eigentlichen Feder- bzw. Dämpferelementen, ähnlich wie bei Achsaufhängungen von Kraftfahrzeugen, oft sogar zusätzliche Wankstabilisatoren vorgesehen werden.

Um zum Beispiel das unerwünschte, seitliche Wanken der Fahrerkabine relativ zum Fahrzeugchassis einzuschränken - beispielsweise bei Schräg- oder Kurvenfahrt, aber auch beispielsweise im Fall einseitiger Fahrbahnunebenheiten - sind bei Aufhängungseinrichtungen nach dem Stand der Technik häufig Querstabilisatoren in Form von Torsionsstäben erforderlich, durch die die Einfederwege der auf die Fahrtrichtung bezogenen linken und rechten Aufhängungselemente der Fahrerkabine miteinander zu einem gewissen Grad gekoppelt werden können. Derartige Torsionsstäbe stellen jedoch zunächst einmal bereits hochbelastete und damit tendenziell teure Bauteile dar.

Um zusätzlich auch Bewegungen bzw. Schwingungen der Fahrerkabine in seitlicher Querrichtung zu unterbinden oder zu dämpfen, müssen oft noch zusätzliche Feder/Dämpfereinheiten in Fahrzeugquerrichtung, oder aber Rollenführungen zur Führung der Fahrerkabine in der vertikalen Bewegungsrichtung vorgesehen werden.

Rollenführungen zur Einschränkung der Querbewegung sind allerdings aufwändig und damit teuer, sowie zudem wartungsintensiv. Darüber hinaus sind derartige Rollenführungen oftmals anfällig in Bezug auf die Dauerfestigkeit, und bringen zudem häufig nicht unerhebliche Geräuschentwicklung mit sich, die sich wiederum nachteilig auf die eigentlich zu verbessernde Ergonomie des Fahrerarbeitsplatzes auswirkt.

In Fahrzeugquerrichtung angeordnete Bewegungsdämpfer hingegen sind zwangsläufig darauf beschränkt, lediglich dynamische Querkräfte abfangen zu können. Bei quasistatischen Belastungen hingegen, wie sie beispielsweise bei längerer Kurven- oder Schrägfahrt auftreten, sind Querdämpfer bauartbedingt wirkungslos.

Diese aus dem Stand der Technik bekannten Vorrichtungen zur Unterdrückung von Wankbewegungen, bzw. zur Dämpfung von Bewegungen der Fahrerkabine in anderen Richtungen als in der Hauptstoßrichtung, sind damit - insbesondere aufgrund der hohen wirkenden Belastungen - konstruktiv aufwändig und überdies wie ausgeführt in ihrer Eignung eingeschränkt.

Darüber hinaus offenbart die DE 698 15 439 T2 eine weitere Aufhängungseinrichtung für ein Fahrerhaus relativ zu einem Fahrzeugchassis, wobei das Fahrerhaus mittels eines Wattgestänges, das aus zwei Querschubstreben sowie einem zentralen Watt'schen Lenker gebildet ist, aufgehängt ist. Die beiden äußeren Anlenkpunkte der beiden Querschubstreben sind an dem Fahrerhaus angelenkt und der zentrale Watt'sche Lenker ist über einen Drehpunkt über eine zentrale, in der Fahrzeugmitte angeordnete Stütze an dem Fahrzeugchassis angelenkt. Nachteilig bei dieser Ausführung ist allerdings, dass störende Wank- oder Nickbewegungen auftreten können.

Mit diesem Hintergrund ist es Aufgabe der vorliegenden Erfindung, eine Aufhängungseinrichtung zur federnden Aufhängung eines Massekörpers zu schaffen, insbesondere zur Aufhängung einer Fahrzeugkabine, mit der sich die genannten Nachteile des Standes der Technik überwinden lassen. Insbesondere soll die Aufhängungseinrichtung ermöglichen, den gewünschten Bewegungsfreiheitsgrad des Massekörpers robust und zuverlässig festzulegen, und dabei gleichzeitig unerwünschte Bewegungen entlang anderer Bewegungsfreiheitsgrade bzw. Raumrichtungen wirksam zu dämpfen bzw. zu unterbinden.

Diese Aufgabe wird durch eine Aufhängungseinrichtung mit den Merkmalen des Patentanspruchs 1 gelöst Bevorzugte Ausführungsformen sind Gegenstand der Unteransprüche.

Die erfindungsgemäße Aufhängungseinrichtung dient in an sich bekannter Weise der federnden Aufhängung eines Massekörpers relativ zu einem Unterbau, also beispielsweise für die Aufhängung der Fahrerkabine eines Lastkraftwagens gegenüber dem Fahrzeugchassis.

In an sich ebenfalls bekannter Weise umfasst die Aufhängungseinrichtung eine zwischen Massekörper und Unterbau angeordnete Feder-/Dämpfer-Anordnung zur Dämpfung von Stößen bzw. Schwingungen.

Die Aufhängungseinrichtung weist ferner zumindest eine Wattgestängeanordnung zur Reduktion der Bewegungsfreiheitsgrade des Massekörpers gegenüber dem Unterbau umfasst. Die Wattgestängeanordnung verbindet dabei den Massekörper und den Unterbau dergestalt, dass Relativbewegungen zwischen Massekörper und Unterbau nur noch eingeschränkt möglich sind.

Mit anderen Worten dient die Wattgestängeanordnung also dazu, dass der Massekörper sich entlang des gewünschten Bewegungsfreiheitsgrads - bzw. entlang der vorgesehenen Raumrichtung - relativ zum Unterbau noch bewegen kann, während die Bewegung des Massekörpers entlang zumindest einer weiteren Raumrichtung gedämpft bzw. unterbunden wird. Die Wattgestängeanordnung dient also zur Reduzierung der Anzahl an Bewegungsfreiheitsgraden des Massekörpers relativ zum Unterbau.

Die Verbindung zwischen Massekörper und Unterbau mittels einer Wattgestängeanordnung ist insbesondere insofern vorteilhaft, als so auf konstruktiv besonders einfache und robuste Weise eine praktisch spielfreie Geradführung des Massekörpers relativ zum Unterbau erreicht wird. Gleichzeitig lassen sich damit unerwünschte seitliche Bewegungen des Massekörpers entlang zumindest einer senkrecht zur Geradführungsrichtung bzw. Hauptstoßrichtung verlaufenden Bewegungsrichtung unterbinden.

Erfindungsgemäß zeichnet sich die die Aufhängungseinrichtung jedoch dadurch aus, dass die Wattgestängeanordnung zumindest zwei Wattgestänge umfasst. Dabei stimmen die Geradführungsrichtungen der zumindest zwei Wattgestänge miteinander überein, die Wattgestänge sind voneinander entlang der gemeinsamen Geradführungsrichtung beabstandet angeordnet, und die Bewegungsebenen der Wattgestänge verlaufen parallel zueinander.

Diese zumindest zwei beabstandete Wattgestänge umfassende Ausführungsform besitzt insbesondere den Vorteil, dass sich zusätzlich zur Geradführung des Massekörpers - die sich bereits mit einem einzigen Wattgestänge verwirklichen lässt - auch sog. Wank- oder ggf. Nickbewegungen wirkungsvoll unterdrücken lassen. Dies hängt damit zusammen, dass beabstandet angeordnete Wattgestänge zwischen Unterbau und Massekörper nicht nur Querkräfte (wie ein einzelnes Wattgestänge), sondern aufgrund des als Hebelarm wirkenden Abstandes zwischen den Wattgestängen auch Drehmomente, wie beispielsweise Wankmomente, übertragen können.

Mit anderen Worten können also - zusätzlich zur Geradführung des Massekörpers - dank einer solchen auch zur Übertragung von Drehmomenten geeigneten Ausführungsform ferner auch unerwünschte Rotationsbewegungen des Massekörpers um zumindest eine seiner Hauptachsen wirkungsvoll unterdrückt werden.

Dabei ist es zunächst einmal unerheblich, wie die zumindest zwei Wattgestänge ausgeführt und angeordnet sind, solange die zu erwartenden Belastungen aufgenommen werden können, und solange aufgrund des Abstandes der Wattgestänge ein zur Übertragung der auftretenden Drehmomente geeigneter Hebelarm gebildet ist. Gemäß einer weiteren, bevorzugten Ausführungsform der Erfindung liegen die Gelenke der zumindest zwei Wattgestänge jedoch im Wesentlichen in einer gemeinsamen Bewegungsebene. Dies bedeutet mit anderen Worten, dass die Gelenke der zumindest zwei Wattgestänge so angeordnet sind, dass die Positionen sämtlicher Gelenke die genannte Bewegungsebene aufspannen, bzw. sämtliche Gelenke der zumindest zwei Wattgestänge im Wesentlichen in ein und derselben Ebene liegen.

Diese Ausführungsform ist insofern vorteilhaft, als hierdurch Verspannungen vermieden werden, bzw. als auf diese Weise die Generierung von Sekundärmomenten, die bei etwaigem Abstand zwischen Bewegungsebenen verschiedener Wattgestänge auftreten könnten, unterbunden wird.

Gemäß einer weiteren Ausführungsform der Erfindung sind die zumindest zwei Wattgestänge in Bezug auf ihre gemeinsame Geradführungsrichtung seitwärts versetzt angeordnet. Diese Ausführungsform erlaubt zusätzlich eine besonders platzsparende und kompakte Anordnung der zumindest zwei Wattgestänge der Wattgestängeanordnung, und vergrößert zudem die konstruktive Gestaltungsfreiheit bezüglich Formgebung und Anordnung der Wattgestänge.

Nach einer weiteren, bevorzugten Ausführungsform umfasst die Wattgestängeanordnung zwei Wattgestänge. Dabei ist der Befestigungspunkt bzw. Lagerungspunkt des zentralen Watt'schen Lenkers, der zum ersten Wattgestänge gehört, mit dem Unterbau verbunden, wobei der Befestigungspunkt bzw. Lagerungspunkt desjenigen Watt'schen Lenkers, der zum zweiten Wattgestänge gehört, mit dem Massekörper verbunden ist.

Auf diese Weise sind die Wattgestänge, bzw. die Lenker, aus denen sich die Wattgestänge zusammensetzen, noch kompakter und sogar in gewissem Maße ineinander verschachtelt anordenbar. Dies führt zu einer besonders kompakten Ausführung der Wattgestängeanordnung mit einer noch besseren Ausnutzung des zur Verfügung stehenden Bauraums.

Eine weitere bevorzugte Ausführungsform der Erfindung sieht vor, dass die Wattgestängeanordnung zwei Wattgestänge umfasst, wobei jedoch der Abstand der Drehpunkte der beiden zentralen Watt'schen Lenker größer ist als die jeweiligen Abstände der den Wattgestänge-Querschubstreben zugeordneten äußeren Anlenkpunkte der beiden Wattgestänge. Dies bedeutet mit anderen Worten, dass die gedachten Verbindungslinien zwischen den sechs Anlenkpunkten der beiden Wattgestänge nicht mehr wie zuvor ein Parallelogramm bilden, sondern sich vielmehr einer Trapezform annähern, da die Abstände zwischen den äußeren Anlenkpunkten der beiden Wattgestänge bei dieser Ausführungsform kleiner sind als die Abstände der beiden zentralen Anlenkpunkte.

Diese Ausführungsform führt damit jedoch zu einer Verlängerung des durch den Abstand der Drehpunkte der beiden zentralen Watt'schen Lenker gebildeten Hebelarms. Dieser verlängerte Hebelarm kann somit besser zur Aufnahme von Drehmomenten, beispielsweise von Wankmomenten einer Fahrerhauskabine, herangezogen werden.

Dies bringt den entscheidenden Vorteil mit sich, dass bei einem gegebenen Drehmoment bzw. Wankmoment nur noch - umgekehrt proportional zur vergrößerten Länge dieses Hebelarms - verringerte Kräfte über die Wattgestängeanordnung übertragen werden müssen. Auf diese Weise wird eine schwächere und damit leichtere Dimensionierung der Wattgestänge ermöglicht, wobei jedoch gleichzeitig die gegebenenfalls erheblichen Drehmomente, beispielsweise aus der Wankabstützung einer Fahrerhauskabine, in unverändertem Maße über die Wattgestängeanordnung übertragen und in den Unterbau, beispielsweise in das Chassis eines Lastkraftwagens, eingeleitet werden können. Ferner werden auf diese Weise auch die verbleibenden Wankbewegungen aufgrund unvermeidlicher Elastizitäten - beispielsweise im Bereich der Wattgestänge, im Bereich der Anlenkungen der Wattgestänge am Massekörper bzw. am Unterbau, oder aber aufgrund von Nachgiebigkeiten etwa eingesetzter Elastomerlager - aufgrund der geringeren zu übertragenden Kräfte reduziert.

Gemäß einer weiteren, besonders bevorzugten Ausführungsform der Erfindung ist ferner vorgesehen, dass die den Querschubstreben der beiden Wattgestänge zugeordneten äußeren Anlenkpunkte jeweils paarweise auf einer beiden Wattgestängen gemeinsamen Schwenkachse liegen. Dies bedeutet mit anderen Worten, dass der Abstand der äußeren Anlenkpunkte zwischen den beiden Wattgestängen bei dieser Ausführungsform nicht wie bei der vorhergehenden Ausführungsform nur um ein gewisses Maß verringert ist, sondern dass dieser Abstand hier gleich null gesetzt wird. Hierdurch teilen sich die äußeren Anlenkpunkte der Querschubstreben der beiden Wattgestänge insgesamt nur noch zwei Gelenkachsen, anstelle wie zuvor vier Gelenkachsen zu beanspruchen.

Auf diese Weise werden Bauelemente und damit Kosten eingespart. Ferner baut die Wattgestängeanordnung auf diese Weise besonders kompakt und bauraumsparend, und es werden konstruktiv nur noch zwei statt zuvor vier rahmenseitige Anbindungspunkte benötigt. Da sich die durch die beiden Watt'schen Lenker erzeugten, auf die rahmenseitigen Anbindungspunkte wirkenden Kräfte bei dieser Anordnung aufgrund vektorieller Addition teilweise gegenseitig aufheben, können die rahmenseitigen Anbindungsteile leichter und somit kostengünstiger ausgelegt werden. Ferner können beim Einsatz von Elastomerlagern reduzierte Steifigkeiten für die Elastomerlager verwendet werden, was bessere Schallisolation verspricht.

Letzteres ist insbesondere dann der Fall, wenn die Lagerung der jeweils zwei mit ihren äußeren Anlenkpunkten zusammenlaufenden Querschubstreben der beiden Wattgestänge zunächst einmal nichtelastisch - zum Zweck der vektoriellen Kraftaddition - auf einer gemeinsamen Schwenkachse erfolgt, während erst die gemeinsame Schwenkachse für sich genommen elastisch an den entsprechenden rahmenseitigen Anbindungspunkten angebunden wird.

Gemäß einer weiteren bevorzugten Ausführungsform der Erfindung ist ferner vorgesehen, dass die im Bereich ihrer äußeren Anlenkpunkte an einer gemeinsamen Schwenkachse angelenkten Querschubstreben der beiden Wattgestänge jeweils einstückig in Form einer Kombinationsstrebe ausgebildet sind. Diese Ausführungsform, bei der die gemeinsam angelenkten Querschubstreben jeweils ein einem Dreieckslenker ähnelndes Bauteil bilden, bringt weitere entscheidende konstruktive Vereinfachungen mit sich.

Denn auf diese Weise findet eine noch weitergehende Reduzierung der Anzahl der notwendigen Bauteile statt. Insbesondere werden nicht mehr vier, sondern nur noch zwei Schwenklager zur Anbindung der äußeren Anlenkpunkte der Querschubstreben benötigt. Ferner können auf diese Weise beide Wattgestänge der so zusammengefassten Wattgestängeanordnung problemlos im Wesentlichen in ein und derselben Ebene angeordnet werden, was nochmals entscheidend Bauraum einspart. Auch bei dieser Ausführungsform sind die in die entsprechenden Anbindungsteile am Fahrzeugchassis eingeleiteten Kräfte aufgrund teilweiser vektorieller Kraftaufhebung geringer, wieder mit der Folge der soeben genannten Vorteile bezüglich Gewicht und Kosten, bzw. bezüglich des Einsatzes von Elastomerlagern für die mögliche Schallisolation.

Die bei dieser Ausführungsform in Abhängigkeit des Einfederwegs möglichen Verspannungen bzw. Verformungen der so gebildeten einstückigen Kombinations-Querschubstreben können zudem konstruktiv dazu herangezogen werden, vom Einfederweg abhängige, strukturell variable Federkonstanten bei der elastischen Aufhängung zwischen Massekörper und Unterbau zu erhalten.

Nach weiteren Ausführungsformen der Erfindung ist vorgesehen, dass zumindest einer der Lagerpunkte, vorzugsweise jedoch mehrere bzw. alle Lagerpunkte der Wattgestängeanordnung als Elastomerlager ausgebildet sind, bzw. dass die Schwenkachsen gemeinsam angelenkter oder einstückiger Querschubstreben-Paare elastisch an Massekörper bzw. Unterbau angebunden sind.

Die Ausbildung eines oder mehrerer der Lagerpunkte, oder sogar aller Lagerpunkte der Wattgestängeanordnung als Elastomerlager bringt insbesondere den Vorteil mit sich, dass die Aufhängungseinrichtung auf diese Weise besonders robust und widerstandsfähig ausgeführt werden kann, wobei sich jedoch gleichzeitig der Wartungsbedarf auf ein Minimum reduziert. Zudem ergibt sich so auch eine zusätzliche Vibrationsdämpfung im Mikrobereich, die sowohl die Lager- und Materialbelastungen verringert, als auch - insbesondere im Fall der Anwendung im Fahrzeugbereich - den mit der Aufhängungseinrichtung erreichbaren Komfort weiter verbessert.

Die elastische Anbindung der Schwenkachsen von gemeinsam angelenkten bzw. einstückigen Querschubstrebenpaaren bringt den bereits weiter oben geschilderten zusätzlichen Vorteil mit sich, dass auf diese Weise - über die gemeinsame Anlenkung der Querschubstrebenpaare, bzw. über die einstückig miteinander verbundenen Querschubstrebenpaare - zunächst eine teilweise vektorielle Aufhebung der in den Querschubstreben herrschenden Zug- bzw. Druckkräfte stattfinden kann, bevor dann lediglich noch die verbleibenden, betragsmäßig viel geringeren Restkräfte elastisch in Unterbau bzw. Massekörper einzuleiten sind.

Schließlich kann durch den Einsatz von Elastomerlagern auch verhindert werden, dass es unter bestimmten Einfederungsbedingungen zu strukturellen Verspannungen bzw. zu einer Selbstsperrung von Wattgestängeanordnungen kommt, und es lassen sich Toleranzen in der Fertigung, bzw. im Betrieb auftretende Verkantungen, besser auffangen.

Gemäß einer weiteren Ausführungsform der Erfindung ist vorgesehen, dass die Aufhängungseinrichtung nicht nur eine, sondern mehrere Wattgestängeanordnungen umfasst. Damit lässt sich - zunächst einmal unabhängig von der konkreten konstruktiven Ausführung und Anordnung der Wattgestänge - eine weiter verbesserte Führungsgenauigkeit, höhere Beanspruchbarkeit sowie eine Erhöhung der Sicherheit, insbesondere im Fall der Anwendung der Erfindung im Fahrzeugbau, erzielen.

Dabei sind nach einer weiteren, besonders bevorzugten Ausführungsform die durch die Gelenke einer der Wattgestängeanordnungen aufgespannten Bewegungsebenen senkrecht zu den durch die Gelenke einer weiteren Wattgestängeanordnung aufgespannten Bewegungsebenen angeordnet. Dies bedeutet mit anderen Worten, dass zumindest zwei Wattgestängeanordnungen eingesetzt werden, deren jeweilige Wattgestänge in zueinander senkrecht stehenden Ebenen angeordnet sind. Auf diese Weise lässt sich der Bewegungsfreiheitsgrad des Massekörpers besonders effektiv auf Bewegungen entlang lediglich einer Raumrichtung beschränken, während Bewegungen entlang der beiden anderen Raumrichtungen ausgeschlossen sind. Auch unerwünschte Rotationen des Massekörpers um zumindest zwei Achsen eines kartesischen Koordinatensystems, also beispielsweise sowohl Wankbewegungen als auch Nickbewegungen einer Fahrzeugkabine, lassen sich auf diese Weise zuverlässig unterbinden.

Gemäß einer weiteren Ausführungsform der Erfindung umfasst die Aufhängungseinrichtung ferner zumindest einen Lenker, zum Beispiel einen Längslenker oder einen Panhardstab. Dabei ist der Lenker senkrecht zu den durch die Gelenke der Wattgestänge einer Wattgestängeanordnung aufgespannten Ebenen angeordnet.

Auf diese Weise wird eine noch bessere Abstützung derjenigen Kräfte erreicht, die senkrecht zu der von den Wattgestängen einer Wattgestängeanordnung aufgespannten Bewegungsebenen, bzw. senkrecht zu einer Hauptbewegungsrichtung des Massekörpers wirken. Ferner lassen sich damit die für die Gelenke und Lenker der Wattgestänge potentiell schädlichen Biegebelastungen durch senkrecht zur Bewegungsebene des Wattgestänges wirkende Kräfte reduzieren.

Im Fall der Anwendung im Kraftfahrzeugbereich bedeutet ein senkrecht zu den Bewegungsebenen einer Wattgestängeanordnung angeordneter Lenker gegebenenfalls auch eine verbesserte Abstützung der im Crashfall auftretenden erheblichen Längskräfte, sofern der bzw. die Lenker in Fahrtrichtung angeordnet sind. Aber auch die Übertragung der - parallel zu den Drehachsen der Lagerung des zusätzlichen Lenkers wirkenden - Querkräfte zwischen Massekörper und Unterbau lässt sich anhand einer geeigneten Auslegung des Lenkers und dessen Lagerung - beispielsweise als Dreieckslenker mit Elastomerlagern - auf diese Weise unterstützen.

Eine weitere, besonders bevorzugte Ausführungsform der Erfindung sieht vor, dass im Wesentlichen die gesamte Aufhängungseinrichtung als modulares Baukastensystem ausgebildet ist. Dies bedeutet mit anderen Worten, dass die wesentlichen Bestandteile der Aufhängungseinrichtung - insbesondere die Lagerungen und Stäbe der Wattgestänge - als untereinander universell kombinierbare Standardbauteile ausgeführt sind. Auf diese Weise lässt sich durch Auswahl der jeweils passenden Standardbauteile besonders einfach und kostengünstig eine Aufhängungseinrichtung mit unterschiedlichsten Abmessungen realisieren, und die Aufhängungseinrichtung kann ohne nennenswerte konstruktive Modifikationen beispielsweise bei unterschiedlichsten Fahrzeuggrößen oder Fahrzeugkategorien, oder auch zum Ausgleich etwa auftretender Anschlusstoleranzen, zum Einsatz gebracht werden.

Alle Ausführungsformen der Erfindung lassen sich ferner mit denselben erfindungsgemäßen Vorteilen realisieren, indem die unterbauseitigen bzw. chassisseitigen Anbindungspunkte der Wattgestängeanordnung mit den massekörperseitigen bzw. fahrerhausseitigen Anbindungspunkten vertauscht werden.

Im Folgenden wird die Erfindung anhand lediglich Ausführungsbeispiele darstellender Zeichnungen näher erläutert. Dabei zeigt:
- **Fig.1**: in schematischer Darstellung eine Aufhängungsanordnung nach dem Stand der Technik in isometrischer Ansicht;
- **Fig. 2**: in einer **Fig.1** entsprechenden Darstellung eine Aufsicht auf das Wattgestänge der Aufhängungsanordnung gemäß **Fig. 1**;
- **Fig. 3**: in einer **Fig. 2** entsprechenden Darstellung und Ansicht eine Wattgestängeanordnung gemäß einer Ausführungsform der Erfindung;
- **Fig. 4**: in einer **Fig. 2** und **3** entsprechenden Darstellung und Ansicht eine Wattgestängeanordnung gemäß einer zweiten Ausführungsform der Erfindung;
- **Fig. 5**: in einer **Fig. 2** bis 4 entsprechenden Darstellung und Ansicht eine Wattgestängeanordnung gemäß einer dritten Ausführungsform der Erfindung;
- **Fig. 6**: in einer **Fig. 2** bis **5** entsprechenden Darstellung und Ansicht eine Wattgestängeanordnung gemäß einer vierten Ausführungsform der Erfindung;
- **Fig. 7**: in einer **Fig.1** entsprechenden Darstellung und Ansicht die Aufhängungsanordnung der Ausführungsform gemäß **Fig. 6**; und
- **Fig. 8**: in einer **Fig. 2** bis **6** entsprechenden Darstellung und Ansicht eine Wattgestängeanordnung gemäß einer fünften Ausführungsform der

### Erfindung.

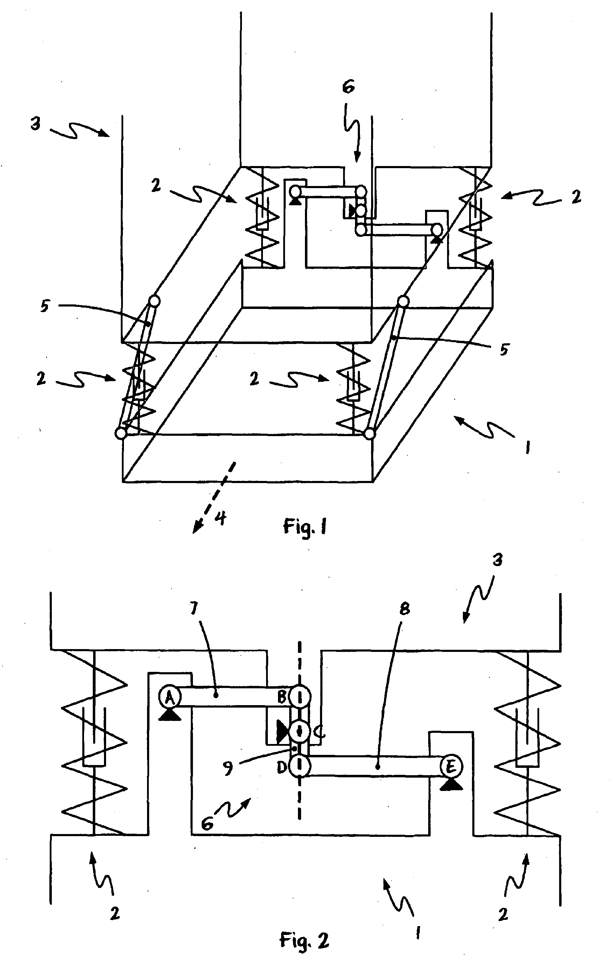

**Fig.1** zeigt in höchst schematischer, isometrischer Darstellung eine Ausführungsform einer Aufhängungsanordnung gemäß des Standes der Technik. Man erkennt zunächst einen Unterbau 1 und einen schematisch angedeuteten, mit dem Unterbau 1 über eine Feder/DämpferAnordnung 2 verbundenen Massekörper 3. Dabei soll der Unterbau bei der dargestellten Ausführungsform den vorderen Bereich des Chassis 1 eines Lastkraftwagens darstellen, während der angedeutete Massekörper für das Fahrerhaus 3 des Lastkraftwagens steht. Die Fahrtrichtung 4 verläuft dabei schräg aus der Zeichenebene heraus, wie durch den strichlierten Pfeil angedeutet.

Man erkennt in **Fig. 1**, dass die Verbindung zwischen Fahrerhaus 3 und Chassis 1 außer vier Feder/DämpferAnordnungen 2 zwei im vorderen Bereich des Fahrerhauses angeordnete Längslenker 5, sowie ein im hinteren Bereich des Fahrerhauses angeordnetes Wattgestänge 6 umfasst. Die lediglich höchst schematisch angedeuteten Längslenker 5, die in der Realität nicht wie hier - der einfacheren Darstellbarkeit - halber schräg nach oben, sondern vielmehr im Wesentlichen waagerecht verlaufen, dienen dabei primär der Längskraftabstützung zwischen Fahrerhaus 3 und Chassis 1. Insbesondere die bei einem etwaigen Crash auftretenden hohen Längskräfte lassen sich dank der Längslenker 5 damit sicher kontrollieren bzw. zwischen Chassis 1 und Führerhaus 3 übertragen. Die Längslenker 5 können jedoch auch so ausgeführt werden, dass damit zusätzlich eine gewisse Querstabilisierung im vorderen Bereich der Fahrerkabine 3 ermöglicht wird.

Im hinteren Bereich des Fahrerhauses 3 ist ein das Fahrerhaus 3 und das Chassis 1 verbindendes Wattgestänge 6 erkennbar, das **Fig. 2** nochmals vergrößert in der rückwärtigen Ansicht - bezogen auf das Fahrerhaus 3 - zeigt. Man erkennt in **Fig. 2**, dass das Wattgestänge 6 fünf Gelenke umfasst, die mit den Buchstaben *A*, *B,* C, *D,* und *E* bezeichnet sind. Von den Gelenken *A* bis *E* sind *A* und *E* rahmenfest, wohingegen *C* fahrerhausfest ist. Die Gelenkpunkte *A* bis *E* des Wattgestänges sind dabei durch eine Anordnung aus zwei Querschubstreben 7, 8 und einem zentralen Watt'schen Lenker 9 miteinander verbunden.

Aufgrund der besonderen Kinematik des Wattgestänges 6 gemäß **Fig. 2** werden dabei die seitlichen Querbewegungen des Fahrerhauses 3 relativ zum Chassis 1 über die Gelenke *A*, *C* und *E* abgestützt, während das Wattgestänge 6 hingegen Relativbewegungen von Fahrerhaus 3 und Chassis 1 entlang der Vertikalen vollkommen ungehindert zulässt. Dies hängt damit zusammen, dass der mittlere Drehpunkt *C* des Watt'schen Lenkers 9 aufgrund seiner Führung durch die beiden Querschubstreben 7 und 8 - die hierzu die gleiche Länge aufweisen müssen, und deren äußere Anlenkpunkte *A* und *E* einen vertikalen Abstand aufweisen müssen, der der Länge des Watt'schen Lenkers 9 entspricht - seine durch die strichlierte Linie angedeutete vertikale Bewegungsbahn nicht verlassen kann. Hierdurch werden Fahrerhaus 3 und Chassis 1 stets in der dargestellten, vertikal übereinander zentrierten Lage gehalten. Eine relative Querbewegung des Fahrerhauses 3 relativ zum Chassis 1 findet nicht statt.

Auftretende statische oder dynamische Querkräfte werden somit unmittelbar über die Querschubstreben 7 und 8, über den Watt'schen Lenker 9 sowie über die Gelenke A bis E zwischen Fahrerhaus 3 und Chassis 1 übertragen, so dass - jedenfalls im Bereich des Wattgestänges 6, bei der vorliegenden Ausführungsform also im hinteren Bereich des Fahrerhauses 3 - keine zusätzliche seitliche Führung oder Abstützung des Fahrerhauses 1 erforderlich ist. Die Vertikalbewegung zwischen Fahrerhaus 3 und Chassis 1 bleibt somit aufgrund der freien vertikalen Beweglichkeit des Watt'schen Lenkers 9 vollständig unbehindert, und wird wie vorgesehen lediglich durch die Feder/Dämpfer-Anordnungen 2 aufgenommen bzw. abgefangen.

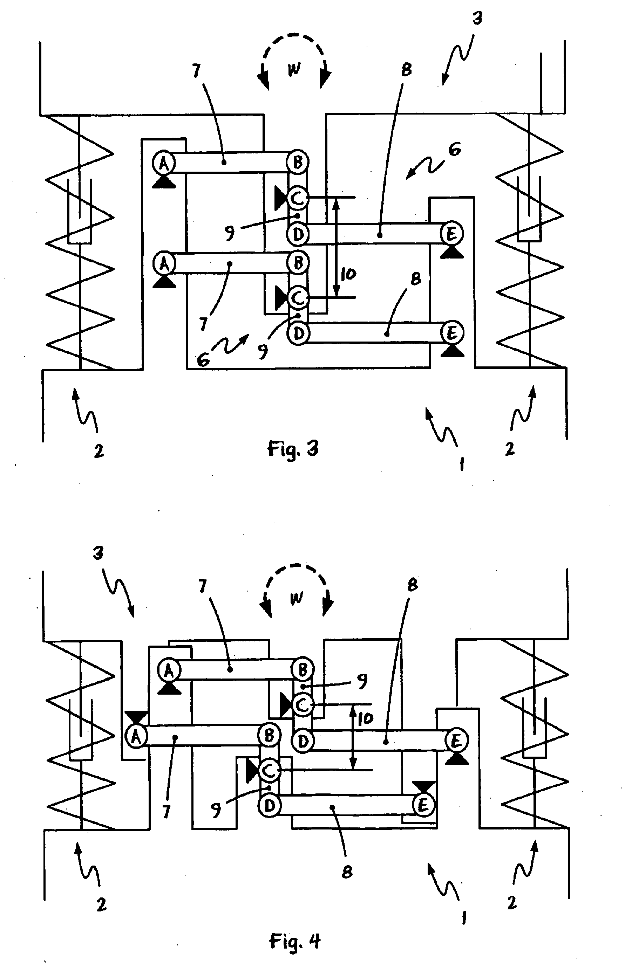

**Fig. 3** und **4** zeigen jeweils Wattgestängeanordnungen gemäß weiterer Ausführungsformen der Erfindung, in einer **Fig. 2** entsprechenden Darstellung und Ansicht. Dabei umfassen die dargestellten Wattgestängeanordnungen jeweils zwei separate, vollständige Wattgestänge 6, deren jeweilige Geradführungsrichtungen übereinstimmen, und deren durch die Lage der jeweiligen Lenker 7, 8 bzw. der jeweiligen Gelenkpunkte *A* bis *E* festgelegte Bewegungsebenen parallel zueinander verlaufen, bzw. deren Bewegungsebenen annäherungsweise mit der Zeichenebene zusammenfallen.

Derartige Ausführungsformen mit zwei vertikal beabstandet angeordneten Wattgestängen 6 besitzen insbesondere den Vorteil, dass sich so nicht nur eine Geradführung des Fahrerhauses 3 relativ zum Chassis 1 realisieren lässt, sondern dass auf diese Weise zusätzlich auch eine Stabilisierung gegenüber Rotationsbewegungen - sprich gegenüber Wankbewegungen *W* gemäß **Fig. 3**, bzw. gegebenenfalls auch gegenüber Nickbewegungen - erfolgen kann.

Dies liegt darin begründet, dass die gemäß **Fig. 3** oder **4** mit gegenseitigem vertikalem Abstand 10 zwischen Chassis 1 und Fahrerhaus 3 angeordneten Wattgestänge 6 nicht nur - wie bei einem einzelnen Wattgestänge - Querkräfte übertragen können. Vielmehr lassen sich auf diese Weise aufgrund des als Hebelarm wirkenden vertikalen Abstandes 10 zwischen den beiden Wattgestängen 6 auch Drehmomente übertragen, die in den in **Fig. 3** und **4** dargestellten Ausführungsbeispielen um die Längsachse des Fahrzeugs wirken, bei denen es sich also um Wankmomente *W* handelt.

Dies bedeutet mit anderen Worten, dass das Fahrerhaus 3 bei den Ausführungsbeispielen gemäß **Fig. 3** und **4** lediglich noch die (erwünschten) vertikalen Ausgleichsbewegungen relativ zum Chassis 1 ausführen kann, dass jedoch seitliche Relativbewegungen bzw. Rotationen *W* um die Fahrzeuglängsachse dank der dargestellten Wattgestängeanordnung unterbunden werden.

Die Wattgestängeanordnungen gemäß **Fig. 3** und **4** unterscheiden sich voneinander zunächst einmal darin, dass die beiden Wattgestänge 6 bei der Ausführungsform gemäß **Fig. 4** seitlich versetzt angeordnet sind. Ferner ist bei der Ausführungsform gemäß **Fig. 4** der Watt'sche Lenker 9 des zeichnungsbezogen oberen Wattgestänges - wie dies auch bei der Ausführungsform gemäß **Fig. 3** der Fall ist - mit seinem Drehpunkt *C* am Fahrerhaus 3 angebunden, während jedoch der Watt'sche Lenker 9 des unteren Wattgestänges hier am Chassis 1 angebunden ist Diese beiden Unterschiede zur Ausführungsform gemäß **Fig. 3** führen bei der Ausführungsform gemäß **Fig. 4** dazu, dass die Wattgestänge ineinander verschachtelt und damit besonders platzsparend angeordnet werden können.

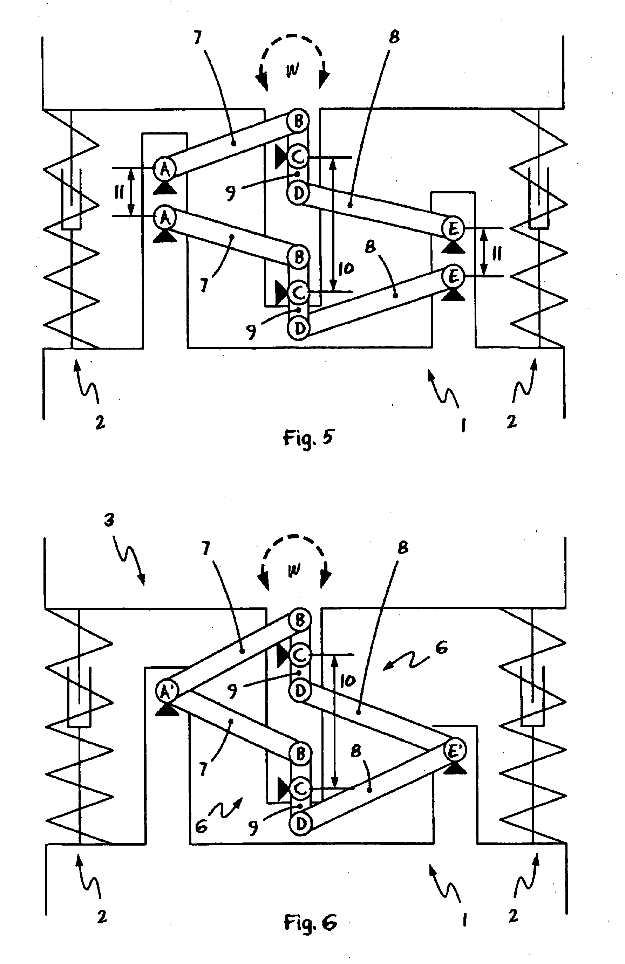

Weitere Ausführungsformen von Aufhängungseinrichtungen insbesondere für Fahrerkabinen sind in den **Fig. 5** und **6** dargestellt. Die hier dargestellten Ausführungsformen gehen im Prinzip auf die Ausführungsform gemäß **Fig. 3** zurück. Die Ausführungsformen gemäß **Fig. 5** und **6** unterscheiden sich von der Ausführungsform gemäß **Fig. 3** jedoch dahingehend, dass der Abstand 10 der Drehpunkte *C* der beiden Watt'schen Lenker 9 hier größer ist als die Abstände 11 der den Querschubstreben 7, 8 zugeordneten äußeren Anlenkpunkte *A*, *E* der beiden Wattgestänge 6.

Wie die Anmelderin herausgefunden hat, beeinträchtigen diese besonderen geometrischen Verhältnisse bei den Ausführungsformen gemäß **Fig. 5** bzw. **6** die Funktion der Wattgestänge in keiner Weise. Dies bedeutet insbesondere, dass die gewünschte Geradführung der Watt'schen Lenker, bzw. die Geradführung der zentralen Anlenkpunkte C der Watt'schen Lenker, auch bei diesen Ausführungsformen vollständig erhalten bleibt.

Auf der anderen Seite ergibt sich jedoch der entscheidende Vorteil, dass der durch den hier vergrößerten Abstand 10 der zentralen Anlenkpunkte *C* der beiden Watt'schen Lenker 9 gebildete Hebelarm 10 proportional zur Vergrößerung des Abstandes 10 dieser beiden Anlenkpunkte *C* verlängert wird. Dies führt jedoch dazu, dass über Chassis 1 oder Fahrerkabine 3 eingeleitete Wankmomente *W* ebenso nur noch zu proportional verringerten Reaktionskräften führen, was sowohl für die innerhalb der Wattgestänge 6 wirkenden Kräfte, als auch für die über Anlenkpunkte *A* und *E* in Chassis 1 bzw. Fahrerkabine 3 eingeleiteten Kräfte gilt.

Dank der Ausführungsformen gemäß **Fig. 5** und **6** können somit sowohl die Wattgestänge 6 als auch deren Aufhängungen *A*, *E* an Chassis 1 und Fahrzeugkabine 3 schwächer und damit masseärmer dimensioniert werden. Darüber hinaus lassen sich auf diese Weise auch die trotz Geradführung verbleibenden Wankbewegungen weiter reduzieren bzw. minimieren. Derartige verbleibende, restliche Wankbewegungen entstehen insbesondere aufgrund unvermeidlicher Elastizitäten beispielsweise im Bereich der Wattgestänge 6, im Bereich der Anlenkungen *A*, *E* der Wattgestänge 6, oder aber aufgrund von Nachgiebigkeiten im Falle einer Elastomerlagerung in einem oder mehrerer der Lagerpunkte *A* bis *E* der Wattgestänge 6. Solche verbleibenden Wankbewegungen lassen sich wegen der proportional geringeren zu übertragenden Kräfte bei den Ausführungsformen gemäß **Fig. 5** bzw. **6** dementsprechend ebenfalls reduziert.

Die Wattgestängeanordnung gemäß **Fig. 6** unterscheidet sich von der Ausführungsform gemäß **Fig. 5** primär insofern, als die den Querschubstreben 7, 8 der beiden Wattgestänge 6 zugeordneten äußeren Anlenkpunkte jeweils paarweise auf einer beiden Wattgestängen 6 gemeinsamen Schwenkachse bei *A*' bzw. *E*' liegen. Dies bedeutet mit anderen Worten, dass der Abstand der äußeren Anlenkpunkt-Paare *A* bzw. *E* zwischen den beiden Wattgestängen 6 bei dieser Ausführungsform nicht wie bei der vorhergehenden Ausführungsform gemäß **Fig. 5** nur um ein gewisses Maß - auf den dortigen Abstand 11- verringert ist, sondern dass dieser Abstand bei der Ausführungsform gemäß **Fig. 6** gleich null gesetzt wurde. Auf diese Weise teilen sich die äußeren Anlenkpunkt-Paare *A* bzw. *E* der Querschubstreben 7 und 8 der beiden Wattgestänge 6 insgesamt nur noch zwei Gelenkachsen bei *A*' bzw. bei *E*', anstelle wie in den Ausführungsbeispielen gemäß **Fig. 3** bis **5** vier Gelenkachsen (zweimal *A*, zweimal *E*) zu beanspruchen.

Auf diese Weise werden somit Bauelemente, hier insbesondere rahmenseitige bzw. chassisseitige Anlenkungen sowie Lagerachsen, und damit auch Kosten eingespart. Ferner lässt sich die Wattgestängeanordnung auf diese Weise besonders kompakt gestalten und spart somit wertvollen Bauraum ein.

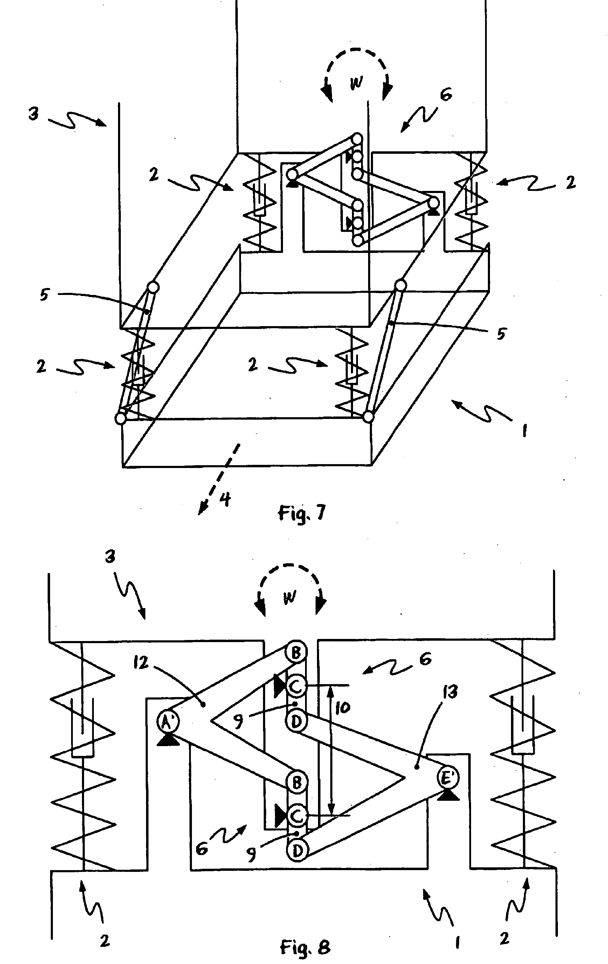

In **Fig. 7** ist die Wattgestängeanordnung gemäß **Fig. 6** nochmals schematisch im Einbauzustand im hinteren Bereich zwischen einer Lkw-Fahrerkabine 3 und einem Chassis 1 dargestellt. Insbesondere anhand einer Zusammenschau von **Fig. 7** mit **Fig. 1****,** **Fig. 3** bzw. **Fig. 4** wird deutlich erkennbar, dass eine Wattgestängeanordnung gemäß den **Fig. 6** bzw. 7 zudem besonders platzsparend ausgeführt und am Kraftfahrzeug angeordnet werden kann.

**Fig. 8** schließlich zeigt eine weitere Ausführungsform einer erfindungsgemäßen Aufhängungseinrichtung mit einer Wattgestängeanordnung 6. Die in **Fig. 8** dargestellte Wattgestängeanordnung geht im Wesentlichen auf die Wattgestängeanordnung gemäß **Fig. 6** bzw. 7 zurück. Die Ausführungsform gemäß **Fig. 8** unterscheidet sich von der Ausführungsform gemäß **Fig. 6** und **7** jedoch insofern, als bei der Wattgestängeanordnung gemäß **Fig. 8** jeweils die zuvor gemäß **Fig. 6** und **7** noch an einer gemeinsamen Schwenkachse bei *A*' bzw. bei *E'* angelenkten, aber separaten Querschubstreben 7, 8 der beiden Wattgestänge nunmehr einstückig in Form jeweils einer Kombinationsstrebe 12, 13 ausgebildet sind.

Diese Ausführungsform, bei der die gemeinsam angelenkten Querschubstreben somit jeweils ein einem Dreieckslenker 12, 13 ähnelndes Bauteil bilden, bringt entscheidende weitere konstruktive Vereinfachungen sowie zusätzliche Vorteile mit sich. Denn zunächst einmal wird so die Anzahl der erforderlichen Bauteile weiter erheblich reduziert. Insbesondere werden dabei auch nicht mehr vier äußere Schwenklager für vier Querschubstreben, sondern nur noch zwei Lager zur Anbindung der äußeren Anlenkpunkte *A*', *E*' der beiden Kombinationsstreben 12, 13 benötigt. Ferner können die beiden auf diese Weise vereinigten Wattgestänge 6 im Wesentlichen in ein und derselben Ebene angeordnet werden, was nochmals entscheidend Bauraum einspart. Schließlich heben sich auf diese Weise auch die innerhalb der Wattgestängeanordnung herrschenden Zug- bzw. Druckkräfte teilweise gegenseitig auf, ohne dass diese Kräfte erst den Umweg über die Anbindung an Chassis bzw. Fahrerkabine gehen müssten.

Die bei dieser Ausführungsform in Abhängigkeit vom Einfederweg möglichen Verspannungen bzw. kinematisch bedingten elastischen Verformungen der so gebildeten einstückigen Kombinationsstreben 12, 13 können zudem konstruktiv dazu herangezogen werden, vom Einfederweg abhängige, variable Federkonstanten der elastischen Aufhängung zwischen Fahrerkabine 3 und Chassis 1 zur Verfügung zu stellen.

Im Ergebnis wird damit deutlich, dass dank der Erfindung eine Aufhängungseinrichtung zur federnden Aufhängung eines Massekörpers, beispielsweise einer Lkw-Fahrerkabine, geschaffen wird, mit der sich der gewünschte, insbesondere vertikale Bewegungsfreiheitsgrad des Massekörpers bzw. der Fahrerkabine platzsparend sowie konstruktiv robust festlegen lässt, wobei gleichzeitig unerwünschte Bewegungen entlang anderer Raumrichtungen wirksam gedämpft bzw. unterbunden werden. Die Erfindung ermöglicht damit eine wartungsarme und kostengünstige federnde Aufhängung insbesondere von Fahrzeugkabinen und dergleichen.

Mit der Erfindung wird somit ein wichtiger Beitrag hinsichtlich Verbesserung der Sicherheit und Zuverlässigkeit insbesondere im Bereich der Lkw-Technologie geleistet; speziell für den Fall, dass bei der Konstruktion von Fahrzeugkabinen Wirtschaftlichkeitserwägungen und Kostensenkung - bei gleichzeitig gesteigerten Qualitätsanforderungen - im Vordergrund stehen.

### Bezugszeichenliste

- 1: Unterbau, Chassis
- 2: Feder/DämpferAnordnung
- 3: Massekörper, Fahrerhaus
- 4: Fahrtrichtung
- 5: Längslenker
- 6: Wattgestänge
- 7,8: Querschubstreben
- 9: Watt'scher Lenker
- *A* bis *E*: Gelenke, Anlenkpunkte
- *A', E'*: Schwenkachsen
- *W*: Wankbewegung, Wankmoment
- 10: Abstand, Hebelarm
- 11: Abstand
- 12,13: Kombinationsstrebe, Dreieckslenker

## Patentansprüche

1. Aufhängungseinrichtung zur federnden Aufhängung eines Massekörpers (3), insbesondere einer Fahrerkabine eines Lastkraftwagens, relativ zu einem Unterbau (1), insbesondere relativ zu einem Fahrzeugchassis, die Aufhängungseinrichtung aufweisend eine zwischen Massekörper (3) und Unterbau (1) angeordnete Feder-/Dämpfer-Anordnung (2) zur Dämpfung von Stößen bzw. Schwingungen, wobei die Aufhängungseinrichtung zumindest eine den Massekörper (3) und den Unterbau (1) eingeschränkt relativbeweglich verbindende Wattgestängeanordnung zur Reduktion der Bewegungsfreiheitsgrade des Massekörpers (3) gegenüber dem Unterbau (1) umfasst
**dadurch gekennzeichnet, dass** die Wattgestängeanordnung zumindest zwei Wattgestänge (6) umfasst, wobei die Geradführungsrichtungea der zumindest zwei Wattgestänge (6) übereinstimmen, wobei die Wattgestänge (6) voneinander entlang der gemeinsamen Geradführungsrichtung beabstandet angeordnet sind, und wobei die Bewegungsebenen der zumindest zwei Wattgestänge (6) parallel zueinander verlaufen.

2. Aufhängungseinrichtung nach Anspruchs 1,
**dadurch gekennzeichnet, dass** die Gelenke *(A, B, C*, *D, E)* der zumindest zwei Wattgestänge (6) im Wesentlichen in einer den zumindest zwei Wattgestängen (6) gemeinsamen Bewegungsebene liegen.

3. Aufhängungseinrichtung nach Anspruch 1 oder 2,
**dadurch gekennzeichnet, dass** die zumindest zwei Wattgestänge (6) in Bezug auf ihre gemeinsame Geradführungsrichtung seitwärts versetzt angeordnet sind.

4. Aufhängungseinrichtung nach einem der Ansprüche 1 bis 3,
**dadurch gekennzeichnet, dass** die Wattgestängeanordnung zwei Wattgestänge (6) umfasst, wobei der Befestigungspunkt des Watt'schen Lenkers (9) des ersten Wattgestänges mit dem Unterbau (1), und der Befestigungspunkt des Watt'schen Lenkers (9) des zweiten Wattgestänges mit dem Massekörper (3) verbunden ist.

5. Aufhängungseinrichtung nach einem der Ansprüche 1 bis 4,
**dadurch gekennzeichnet, dass** die Wattgestängeanordnung zwei Wattgestänge (6) umfasst, wobei der Abstand (10) der Drehpunkte (C) der beiden Watt'schen Lenker (9) größer ist als der Abstand (11) der den Querschubstreben (7, 8) zugeordneten äußeren Anlenkpunkte (A, E) der beiden Wattgestänge (6).

6. Aufhängungseinrichtung nach Anspruch 5,
**dadurch gekennzeichnet, dass** die den Querschubstreben (7, 8) der beiden Wattgestänge (6) zugeordneten äußeren Anlenkpunkte jeweils paarweise auf einer den beiden Wattgestängen (6) gemeinsamen Schwenkachse (*A'*, *E'*) liegen.

7. Aufhängungseinrichtung nach Anspruch 5 oder 6,
**dadurch gekennzeichnet, dass** die an einer gemeinsamen Schwenkachse angelenkten Querschubstreben der beiden Wattgestänge (6) jeweils paarweise einstückig in Form einer Kombinationsstrebe (12, 13) ausgebildet sind.

8. Aufhängungseinrichtung nach einem der Ansprüche 1 bis 7,
**dadurch gekennzeichnet, dass** zumindest einer der Lagerpunkte *(A, B, C*, *D, E*) der Wattgestängeanordnung als Elastomerlager ausgebildet ist.

9. Aufhängungseinrichtung nach einem der Ansprüche 6 bis 8,
**dadurch gekennzeichnet, dass** die Schwenkachsen (*A', E')* gemeinsam angelenkter bzw. einstückiger Querschubstreben-Paare elastisch an Massekörper bzw. Unterbau angebunden sind.

10. Aufhängungseinrichtung nach einem der Ansprüche 1 bis 9,
**dadurch gekennzeichnet, dass** die Aufhängungseinrichtung mehrere Wattgestängeanordnungen umfasst, wobei die Bewegungsebenen einer Wattgestängeanordnung senkrecht zu den Bewegungsebenen einer weiteren Wattgestängeanordnung angeordnet sind.

11. Aufhängungseinrichtung nach einem der Ansprüche 1 bis 10,
**dadurch gekennzeichnet, dass** die Aufhängungseinrichtung zumindest einen senkrecht zu den Bewegungsebenen einer Wattgestängeanordnung angeordneten Lenker (5) umfasst.

12. Aufhängungseinrichtung nach einem der Ansprüche 1 bis 11,
**dadurch gekennzeichnet, dass** die Aufhängungseinrichtung als Stäbe und Gelenke umfassendes modulares Baukastensystem ausgebildet ist.

## Claims

1. Suspension device for the spring-loaded suspension of a mass body (3), in particular a driver's cab of a lorry, relative to a substructure (1), in particular relative to a vehicle chassis, the suspension device having a spring-/damper arrangement (2) disposed between mass body (3) and substructure (1) for damping impacts and/or vibrations, wherein the suspension device comprises at least one Watt's linkage arrangement, which connects the mass body (3) and the substructure (1) so that they are movable to a limited extent relative to one another, for reducing the degrees of freedom of motion of the mass body (3) relative to the substructure (1),
**characterized in that** the Watt's linkage arrangement comprises at least two Watt's linkages (6), wherein the directions of straight-line motion of the at least two Watt's linkages (6) correspond, wherein the Watt's linkages (6) are arranged spaced apart from one another along the common direction of straight-line motion, and wherein the planes of motion of the at least two Watt's linkages (6) extend parallel to one another.

2. Suspension device according to claim 1,
**characterized in that** the joints (A, B, C, D, E) of the at least two Watt's linkages (6) lie substantially in a plane of motion that is common to the at least two Watt's linkages (6).

3. Suspension device according to claim 1 or 2,
**characterized in that** the at least two Watt's linkages (6) are arranged laterally offset relative to their common direction of straight-line motion.

4. Suspension device according to one of claims 1 to 3,
**characterized in that** the Watt's linkage arrangement comprises two Watt's linkages (6), wherein the fastening point of the Watt's control arm (9) of the first Watt's linkage is connected to the substructure (1) and the fastening point of the Watt's control arm (9) of the second Watt's linkage is connected to the mass body (3).

5. Suspension device according to one of claims 1 to 4,
**characterized in that** the Watt's linkage arrangement comprises two Watt's linkages (6), wherein the spacing (10) of the centres of rotation (C) of the two Watt's control arms (9) is greater than the spacing (11) of the outer pivot points (A, E) of the two Watt's linkages (6) that are associated with the lateral thrust struts (7, 8).

6. Suspension device according to claim 5,
**characterized in that** the outer pivot points that are associated with the lateral thrust struts (7, 8) of the two Watt's linkages (6) lie in each case in pairs on a swivelling axis (A', E') that is common to the two Watt's linkages (6).

7. Suspension device according to claim 5 or 6,
**characterized in that** the lateral thrust struts of the two Watt's linkages (6) that are coupled to a common swivelling axis are designed in each case in pairs integrally in the form of a combination strut (12, 13).

8. Suspension device according to one of claims 1 to 7,
**characterized in that** at least one of the bearing points (A, B, C, D, E) of the Watt's linkage arrangement is designed as an elastomer bearing.

9. Suspension device according to one of claims 6 to 8,
**characterized in that** the swivelling axes (A', E') of jointly coupled and/or integral lateral thrust strut pairs are connected flexibly to mass body and/or substructure.

10. Suspension device according to one of claims 1 to 9,
**characterized in that** the suspension device comprises a plurality of Watt's linkage arrangements, wherein the planes of motion of one Watt's linkage arrangement are disposed at right angles to the planes of motion of a further Watt's linkage arrangement.

11. Suspension device according to one of claims 1 to 10,
**characterized in that** the suspension device comprises at least one control arm (5) that is disposed at right angles to the planes of motion of a Watt's linkage arrangement.

12. Suspension device according to one of claims 1 to 11,
**characterized in that** the suspension device is designed as a modular building-block system comprising rods and joints.

## Revendications

1. Dispositif de suspension pour la suspension à ressort d'un corps de masse (3), en particulier d'une cabine de conducteur d'un véhicule poids lourd, par rapport à une structure porteuse (1), en particulier par rapport à un châssis de véhicule, le dispositif de suspension comprenant un ensemble d'élément ressort/amortisseur (2) disposé entre le corps de masse (3) et la structure porteuse (1) en vue d'amortir des chocs et des vibrations, le dispositif de suspension comprenant au moins un agencement de tringlerie à parallélogramme de Watt reliant le corps de masse (3) à la structure porteuse (1) de façon mobile en mouvements relatifs limités, en vue de réduire les degrés de liberté de mouvement du corps de masse (3) par rapport à la structure porteuse (1),
**caractérisé en ce que**
l'agencement de tringlerie à parallélogramme de Watt comprend au moins deux tringleries à parallélogramme de Watt (6), les directions de guidage droit desdites au moins deux tringleries à parallélogramme de Watt (6) coïncidant l'une avec l'autre, les tringleries à parallélogramme de Watt (6) étant disposées à une distance l'une de l'autre, le long de leur direction de guidage droit commune, et les plans de mouvement desdites au moins deux tringleries à parallélogramme de Watt (6) s'étendant parallèlement l'un à l'autre.

2. Dispositif de suspension selon la revendication 1,
**caractérisé en ce que**
les articulations *(A, B, C*, *D, E*) desdites au moins deux tringleries à parallélogramme de Watt (6) se trouvent dans un plan de mouvement qui est essentiellement commun aux dites au moins deux tringleries à parallélogramme de Watt (6).

3. Dispositif de suspension selon la revendication 1 ou 2,
**caractérisé en ce que**
lesdites au moins deux tringleries à parallélogramme de Watt (6) sont disposées de façon latéralement décalée l'une par rapport à l'autre, par rapport à leur direction de guidage droit commune.

4. Dispositif de suspension selon l'une des revendications 1 à 3,
**caractérisé en ce que**
l'agencement de tringlerie à parallélogramme de Watt comprend deux tringleries à parallélogramme de Watt (6), le point de fixation de la biellette longitudinale (9) de Watt de la première tringlerie de Watt est relié à la structure porteuse (1), et le point de fixation de la biellette longitudinale (9) de Watt de la deuxième tringlerie de Watt est relié au corps de masse (3).

5. Dispositif de suspension selon l'une des revendications 1 à 4,
**caractérisé en ce que**
l'agencement de tringlerie à parallélogramme de Watt comprend deux tringleries à parallélogramme de Watt (6), la distance (10) entre les points de rotation (*C*) des deux biellettes longitudinales (9) de Watt étant plus grande que la distance (11) entre les points d'articulation extérieurs (*A*, *E*) associés aux biellettes transversales (7, 8) des deux tringleries à parallélogramme de Watt (6).

6. Dispositif de suspension selon la revendication 5,
**caractérisé en ce que**
les points d'articulation extérieurs associés aux biellettes transversales (7, 8) des deux tringleries à parallélogramme de Watt (6) sont agencés par paires sur un axe d'oscillation *(A', E'*) commun aux deux tringleries à parallélogramme de Watt (6).

7. Dispositif de suspension selon les revendications 5 ou 6,
**caractérisé en ce que**
les biellettes transversales articulées sur un axe d'oscillation commun des deux tringleries à parallélogramme de Watt (6) sont conformées par paires, d'un seul tenant, en forme de biellettes combinées (12, 13).

8. Dispositif de suspension selon l'une des revendications 1 à 7,
**caractérisé en ce que**
l'un au moins des points d'articulation *(A, B, C*, *D, E*) de l'agencement de tringlerie à parallélogramme de Watt est réalisé sous forme d'un palier élastomère.

9. Dispositif de suspension selon l'une des revendications 6 à 8,
**caractérisé en ce que**
les axes d'oscillation *(A', E'*) de paires de biellettes transversales montées ensemble, ou conformées par paires monobloc, sont reliés de façon élastique respectivement au corps de masse ou à la structure porteuse.

10. Dispositif de suspension selon l'une des revendications 1 à 9,
**caractérisé en ce que**
le dispositif de suspension comprend plusieurs agencements de tringleries à parallélogramme de Watt, les plans de mouvement de l'un des agencements de tringlerie à parallélogramme de Watt s'étendant perpendiculairement aux plans de mouvement d'un autre des agencements de tringlerie à parallélogramme de Watt.

11. Dispositif de suspension selon l'une des revendications 1 à 10,
**caractérisé en ce que**
le dispositif de suspension comprend au moins un bras de commande (5) disposé perpendiculairement aux plans de mouvement d'un agencement de tringlerie à parallélogramme de Watt.

12. Dispositif de suspension selon l'une des revendications 1 à 11,
**caractérisé en ce que**
le dispositif de suspension est réalisé sous forme d'un système de composants modulaires comprenant des tiges et des articulations.
